# FASCICULE DE BREVET EUROPEEN

(11) **EP 1 002 747 B1**
(45) Date de publication et mention de la délivrance du brevet: **28.08.2002**
(21) Numéro de dépôt: 99402834.8
(22) Date de dépôt: 16.11.1999
(51) Int. Cl.: B65G 47/84, B65G 47/82

(54) **Dispositif automatique permettant un débit élevé dans l'évacuation d'objets à partir d'une table vibrante vers un convoyeur en ligne**
Automatische Vorrichtung mit hohem Durchsatz zum Abführen von Gegenständen von einem Rütteltisch zu einem nachfolgenden Förderer
Automatic device for high flow rate of objects from a vibrating table to an in-line conveyor

(30) Priorité: 19.11.1998 FR 9814542
(43) Date de publication de la demande: 24.05.2000
(73) Titulaire: SOCIETE D'UTILISATION SCIENTIFIQUE ET INDUSTRIELLE DU FROID USIFROID, 78310 Maurepas (FR)
(72) Inventeur: Gallet, Patrick, 91540 Mennecy (FR)
(74) Mandataire: Lhuillier, René

(56) Documents cités:
- CH-A- 554 793
- FR-A- 1 390 162
- US-A- 5 092 449

## Description

La présente invention concerne un dispositif automatique permettant un débit élevé dans l'évacuation, à partir d'une table vibrante et vers un convoyeur en ligne, d'objets à fond plat arrivant en continu. Ces objets peuvent par exemple être des flacons ou des boîtes, qui viennent d'être remplis ou de subir un traitement industriel, et qui vont alimenter une sertisseuse.

Un tel dispositif s'applique entre autres à l'évacuation de flacons issus de cuves de lyophilisation. On rappelle à cet égard que les cuves de lyophilisation sont destinées à traiter certaines substances, notamment des matières biologiques, contenues le plus souvent dans des flacons dont la base est un cercle de faible section. Parmi les contraintes essentielles attachées à ce domaine de la technique, on relèvera d'abord les conditions d'hygiène très strictes (conditionnement aseptique et prévention de la contamination), dont la satisfaction requiert de préférence un système sans intervention humaine. C'est pourquoi les dispositifs d'acheminement automatiques sont préférables aux dispositifs manuels.

De plus, il importe de pouvoir charger dans les cuves, et en décharger, le plus grand nombre de flacons possible dans le temps le plus court possible, non seulement pour des raisons de rentabilité ordinaires liées aux flux tendus, mais également du fait que, pendant ces opérations dé chargement et de déchargement, les cuves sont ouvertes à l'atmosphère extérieure (cette communication représente une contrainte fâcheuse car, outre les conditions d'hygiène mentionnées ci-dessus, le procédé de lyophilisation requiert l'obtention dans les cuves d'un très bas degré d'humidité).

Les étapes successives de l'acheminement des flacons entrant dans les cuves de lyophilisation et en sortant après traitement, jusqu'au dépôt de ces flacons sur une table vibrante, ont d'ailleurs fait l'objet de deux demandes de brevet au nom de la présente Demanderesse. La présente invention concerne donc la phase suivante et finale de ce parcours, au début de laquelle les flacons arrivent à la fin de leur cheminement sur ladite table vibrante, qui sert de tampon pour l'évacuation vers un convoyeur en ligne.

Comme on le verra à la lecture de la description ci-dessous, l'invention s'applique à toutes sortes d'objets à fond plat, qui peuvent être cylindriques, coniques ou autres, mais que par commodité l'on désignera dorénavant globalement du terme de "flacons".

L'état de la technique comprend déjà des dispositifs automatiques permettant d'évacuer de tels flacons d'une table vibrante vers un convoyeur en ligne dont la bande transporteuse prend naissance au niveau d'un coin antérieur de ladite table. Dans certains de ces dispositifs, ladite bande transporteuse s'étend dans une direction longitudinale par rapport à la table vibrante, et l'on place, dans l'angle formé par l'avant de la table vibrante et la bande transporteuse, une roue dentée en rotation uniforme dont les creux entre les dents ont une forme épousant la forme desdits flacons ; cette roue happe ainsi les flacons dans lesdits creux pour les déposer un instant plus tard sur le convoyeur. Dans d'autres dispositifs classiques, la bande transporteuse s'étend transversalement par rapport à la table vibrante, et les flacons sont entraînés par une dentelure rectiligne exécutant un mouvement alternatif le long du bord antérieur de ladite table.

Ces dispositifs connus doivent laisser aux flacons le temps de s'insérer suffisamment à l'intérieur desdits creux pour pouvoir assurer leur transport sans que les flacons ne sortent prématurément des creux. De ce fait, les dispositifs connus n'autorisent qu'un faible débit, très insuffisant par rapport au débit de plusieurs centaines par minute au minimum qui est souhaitable ici pour les raisons exposées ci-dessus.

Afin de permettre une évacuation fiable même à haut débit, la présente invention propose un dispositif automatique servant à l'évacuation, à partir d'une table vibrante et vers un convoyeur en ligne, d'objets à fond plat arrivant en continu, qui opère de manière cyclique et dont chacun des cycles comprend les étapes suivantes :
lesdits objets sont accueillis dans un fossé contigu au bord antérieur de ladite table vibrante de façon à former une rangée,
ladite rangée d'objets est poussée par un poussoir, dont la vitesse initiale est nulle, vers une surface lisse s'étendant dans une direction transversale par rapport à la table vibrante dans le prolongement dudit fossé,
lesdits objets arrivent sur une bande transporteuse située dans le prolongement de ladite surface lisse, et,
pendant que le poussoir évacue ladite rangée puis retourne à sa position initiale, une nouvelle rangée d'objets se forme progressivement dans le fossé.

Selon une caractéristique supplémentaire de l'invention, on pratique une échancrure sur l'extrémité antérieure d'un garde-fou qui longe le bord latéral de ladite table vibrante situé du même côté de la table vibrante que ladite surface lisse, afin de faire tomber au moment où il atteint ledit bord de la table vibrante tout objet qui, après avoir sauté dans ledit fossé, s'est renversé de manière à ce qu'une partie dudit objet repose sur la table vibrante.

Selon une autre caractéristique supplémentaire de l'invention, ledit poussoir est fixé à une bande sans fin qui s'enroule sous tension autour de deux roues motrices.

D'autres avantages, buts et caractéristiques de la présente invention ressortiront de la description ci-dessous d'un mode de réalisation de l'invention présenté à titre d'exemple, ladite description s'appuyant sur les figures annexées, dans lesquelles :
la figure 1 est une vue en plan d'un dispositif conforme à l'invention, à l'instant où l'évacuation d'une rangée de flacons va commencer, et
la figure 2 est un graphique illustrant les propriétés linéaires du mouvement dudit poussoir au cours du temps, la courbe A représentant l'accélération du poussoir, la courbe B sa vitesse et la courbe C son déplacement.

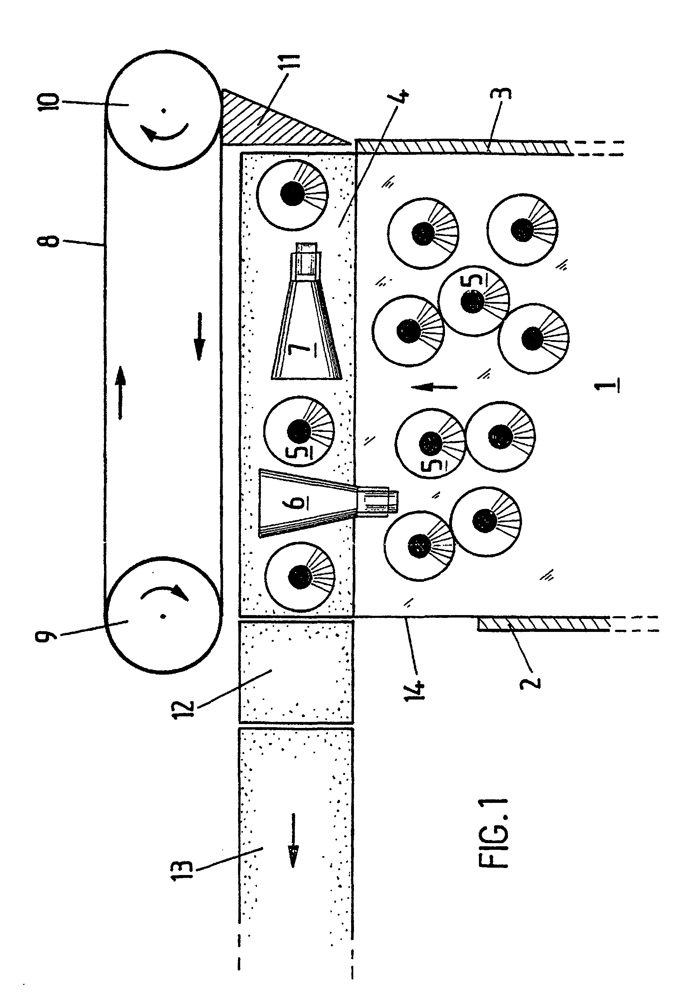

On peut voir sur la figure 1 un certain nombre de flacons s'approchant de l'extrémité antérieure d'une table vibrante 1 qu'ils ont traversée dans le sens longitudinal indiqué par la flèche. La table vibrante 1 est bordée sur ses côtés latéralement opposés de garde-fous longitudinaux 2 et 3.

Un fossé 4 s'étend de manière contiguë au bord antérieur de la table vibrante 1, légèrement en contrebas. La largeur de ce fossé 4 est quelque peu supérieure à celle des flacons de manière à ce qu'ils puissent facilement s'y loger en restant debout après y être tombés, comme c'est par exemple le cas du flacon 5. Il pourra éventuellement se produire (en principe, assez rarement) que l'un des flacons se renverse, soit de manière à être couché à l'intérieur du fossé 4, comme c'est par exemple le cas du flacon 7, soit de travers de manière à ce qu'une partie du flacon repose sur la table vibrante 1, comme c'est par exemple le cas du flacon 6 ; le cas particulier de ces flacons renversés sera traité à la fin de la présente description.

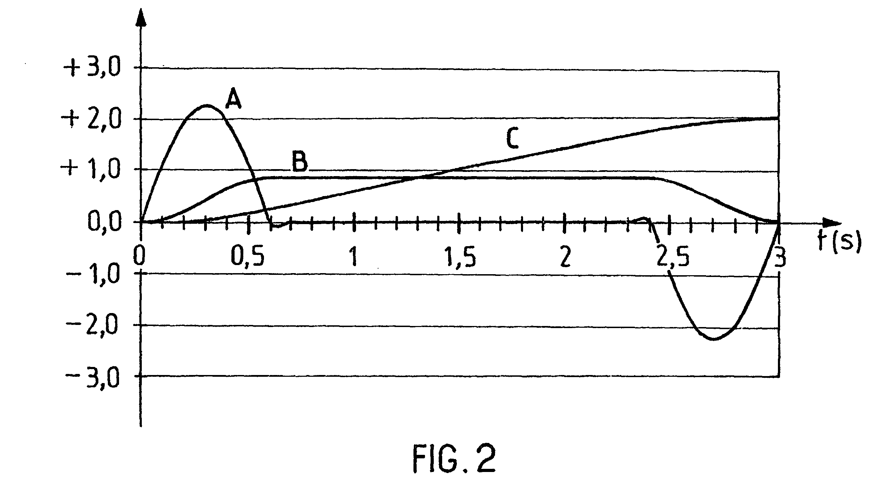

Le long du bord antérieur du fossé 4 circule, dans le sens indiqué par les flèches, une bande sans fin 8 qui s'enroule sous tension autour de deux roues motrices 9 et 10 aux axes verticaux. Cette bande sans fin 8 sert à transporter un poussoir 11 fixé sur elle, le long d'un circuit fermé parcouru périodiquement selon un mouvement dont les propriétés linéaires en fonction du temps sont indiquées dans le Tableau 1. Les valeurs numériques contenues dans ce Tableau 1 (qui sont fournies uniquement à titre d'exemple destiné à aider à la compréhension de l'invention) ont été portées sur le graphique de la figure 2. On prend pour instant initial (t = 0) le moment où le poussoir 11 se place le long du bord latéral du fossé 4 qui se situe dans le prolongement du garde-fou 3.

Le long du bord latéral opposé du fossé 4, c'est-à-dire le bord situé dans le prolongement du garde-fou 2, est disposée une surface lisse 12, de longueur égale à 18 mm et de largeur au moins égale à celle du fossé 4, auquel ladite surface lisse 12 fait donc suite dans la direction transversale par rapport à la table vibrante 1. Dans la même direction et faisant suite à la surface lisse 12, enfin, s'étend le convoyeur. La direction du mouvement uniforme de la bande transporteuse 13 du convoyeur, dont la vitesse est égale à 22 cm/s, est indiquée par une flèche sur la figure 1.

On va décrire à présent le fonctionnement du dispositif selon l'invention en s'appuyant sur les données numériques contenues dans le Tableau 1, parmi lesquelles les mesures de distance concernent le déplacement du poussoir 11, d'abord le long du bord antérieur de la table vibrante 1, lequel mesure 600 mm, puis le long du chemin qui contourne les roues motrices 9 et 10 et ramène le poussoir 11 dans sa position initiale.

La vitesse du poussoir 11 est initialement nulle. Il se met alors à pousser les flacons vers la surface lisse 12 d'un mouvement qui balaye entièrement le fossé 4. La vitesse du poussoir 11 se stabilise à environ 85 cm/s au bout de 0,6 s. Cette accélération progressive de la rangée de flacons, poussée qu'elle est par le poussoir 11, assure que lesdits flacons ne seront pas endommagés malgré les petits intervalles existant initialement entre eux.

Le poussoir 11 finit de pousser la rangée de flacons, c'est-à-dire atteint ladite distance de 600 mm, à t = 1,0 s. Le flacon situé en tête pénètre à l'instant initial, avec une vitesse nulle, sur la surface lisse 12 sur laquelle il se met à accélérer en glissant. Quand ce flacon de tête atteint le bord opposé de cette surface lisse 12, à t = 0,2 s, sa vitesse est égale à 22 cm/s, qui est précisément celle de la bande transporteuse 13 : ce flacon arrive donc sur la bande transporteuse 13 sans aucun heurt. Les flacons suivants accélèrent sur une plus grande distance avant d'arriver sur la bande transporteuse 13, et de ce fait leur vitesse y est supérieure à celle de la bande transporteuse 13 ; cela ne cause heureusement pas de problème, car le revêtement absorbant de la bande transporteuse 13 a vite fait de ralentir ces flacons en douceur, comme il est généralement pratiqué dans la technique des convoyeurs.

Pendant que le poussoir 11 parcourt le chemin du retour, une nouvelle rangée de flacons remplit le fossé 4. A t = 2,5 s environ, le poussoir 11 commence à ralentir et il se retrouve, à t = 3,0 s, dans sa position initiale au bord du fossé 4, et un nouveau cycle d'évacuation commence.

La commande des moteurs actionnant les roues motrices 9 et 10 est évidemment conçue pour produire la cinématique souhaitée, décrite ci-dessus, pour le poussoir 11 au long de chaque cycle d'évacuation.

Le cas des occasionnels flacons, tels que le flacon 7, couchés dans la direction de la bande transporteuse 13, est traité de façon connue simplement en prévoyant une sinuosité dans le chemin suivi par la bande transporteuse 13 avant d'aboutir à la sertisseuse : à l'endroit de ce passage sinueux, lesdits flacons couchés tombent du convoyeur dans un réceptacle prévu à cet effet.

Quant aux occasionnels flacons, tels que le flacon 6, qui glissent ou roulent sur la table vibrante 1 pendant que la rangée de flacons dont ils font partie est en cours d'évacuation, il est prévu de les faire tomber dans un réceptacle prévu à cet effet au moment où ils atteignent la surface lisse 12 : ce résultat est obtenu simplement au moyen d'une échancrure 14 pratiquée sur l'extrémité antérieure du garde-fou 2. Cette échancrure permet également d'éviter qu'un tel flacon ne vienne buter contre l'extrémité antérieure du garde-fou 2, ce qui aurait pour conséquence désastreuse de bloquer l'avancement de la rangée dont il fait partie.

Grâce à ces dispositions, le système selon l'invention permet, de manière automatique et tout à fait fiable même à haut débit, d'évacuer tous types d'objets à fond plat, fragiles ou non, à partir d'une table vibrante pour les acheminer sur un convoyeur vers leur destination finale.

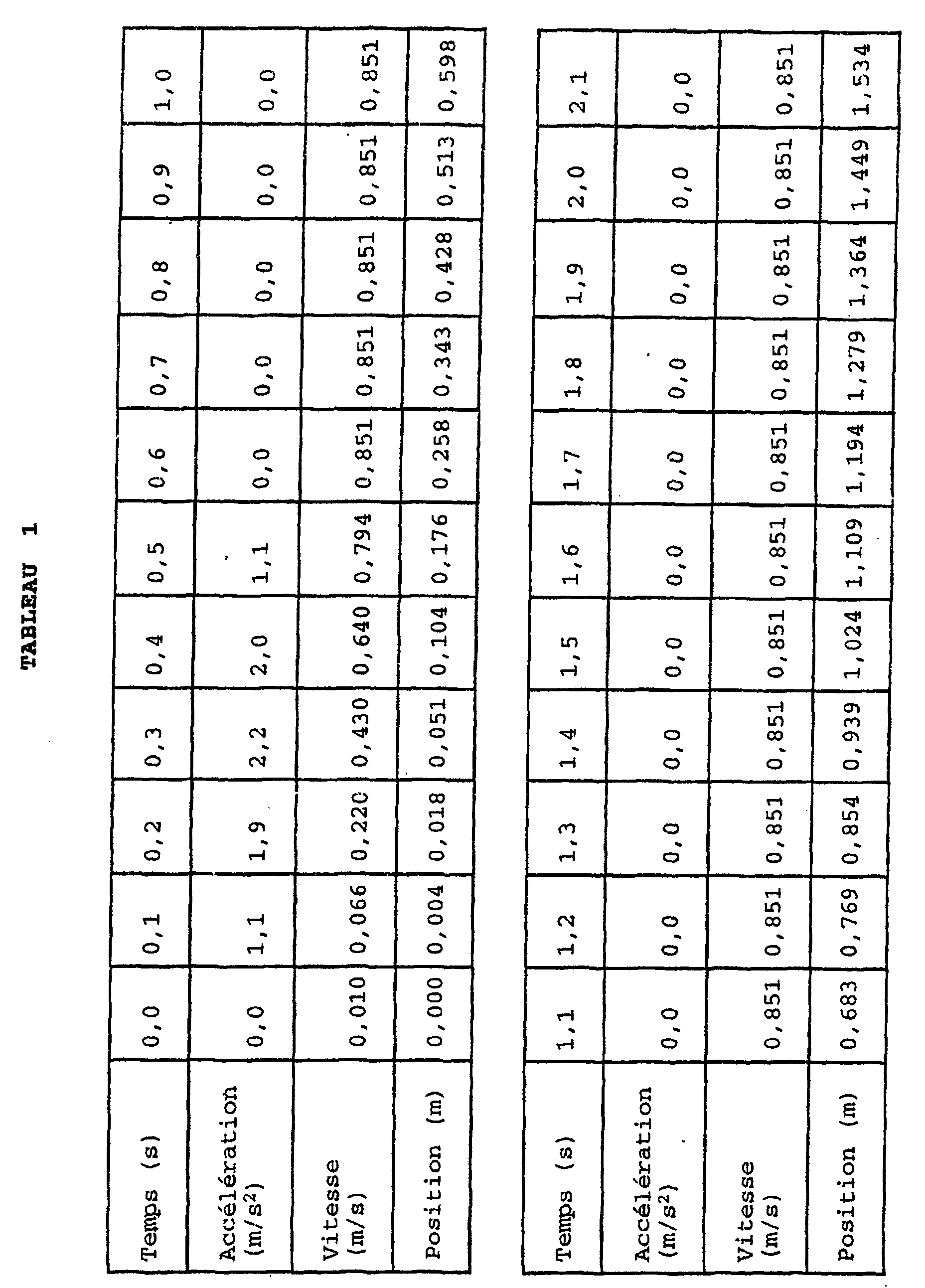

## Revendications

1. Dispositif automatique servant à l'évacuation, à partir d'une table vibrante et vers un convoyeur en ligne, d'objets à fond plat arrivant en continu, **caractérisé en ce qu'**il opère de manière cyclique, chacun des cycles comprenant les étapes suivantes :
lesdits objets sont accueillis dans un fossé (4) contigu au bord antérieur de ladite table vibrante (1) de façon à former une rangée,
ladite rangée d'objets est poussée par un poussoir (11), dont la vitesse initiale est nulle, vers une surface lisse (12) s'étendant dans une direction transversale par rapport à la table vibrante (1) dans le prolongement du fossé (4),
lesdits objets arrivent sur une bande transporteuse (13) située dans le prolongement de la surface lisse (12), et,
pendant que le poussoir (11) évacue ladite rangée puis retourne à sa position initiale, une nouvelle rangée d'objets se forme progressivement dans le fossé (4).

2. Dispositif selon la revendication 1, **caractérisé en ce qu'**une échancrure (14) a été pratiquée sur l'extrémité antérieure d'un garde-fou (2) qui longe le bord latéral de ladite table vibrante (1) situé du même côté de la table vibrante (1) que ladite surface lisse (12), afin de faire tomber au moment où il atteint ledit bord de la table vibrante (1) tout objet (6) qui, après avoir sauté dans ledit fossé (4), s'est renversé de manière à ce qu'une partie dudit objet (6) repose sur la table vibrante (1).

3. Dispositif selon la revendication 1 ou la revendication 2, **caractérisé en ce que** ledit poussoir (11) est fixé à une bande sans fin (8) qui s'enroule sous tension autour de deux roues motrices (9) et (10).

## Claims

1. Automatic device for discharging, from a vibrating table to a conveyor in a line, objects having a flat base that arrive continuously, **characterised in that** the device operates in a cyclical manner, each of the cycles comprising the following steps :
said objects are received in a trough (4) contiguous with the front edge of said vibrating table (1) so as to form a row,
said line of objects is pushed by a pushing device (11), the initial speed of which is zero, towards a smooth surface (12) that extends in a direction transverse to the vibrating table (1) in extension of the trough (4),
said objects arrive onto a conveyor belt (13) positioned in extension of the smooth surface (12), and
whilst the pushing device (11) discharges said row and then returns to its starting position, a new row of objects gradually is built up in the trough (4).

2. Device according to claim 1, **characterised in that** there is a notch (14) in the front end of a side-rail (2) that extends along the side edge of said vibrating table (1) located on the same side of the vibrating table (1) as said smooth surface (12), so that any object (6) that, after having jumped into said trough (4), has overturned in such a manner that a portion of said object (6) rests on the vibrating table (1), is caused to fall at the moment when it reaches said edge of the vibrating table (1).

3. Device according to claim 1 or claim 2, **characterised in that** said pushing device (11) is fixed to a endless belt (8) that is wound under tension around two driving wheels (9,10).

## Patentansprüche

1. Automatische Vorrichtung zum Abführen von flachen Gegenständen, die kontinuierlich eintreffen, von einem Rütteltisch zu einem nachfolgenden Förderer, **dadurch gekennzeichnet,**
**dass** sie zyklisch arbeitet, wobei jeder der Zyklen folgende Schritte umfasst :
die genannten Gegenstände werden von einer Rinne (4), die an den Rütteltisch (1) angrenzt, so aufgenommen, dass sie eine Reihe bilden,
die genannte Reihe von Gegenständen wird durch eine Schiebeeinrichtung (11), deren Anfangsgeschwindigkeit null ist, auf eine glatte Fläche (12) geschoben, die in Bezug auf den Rütteltisch (1) in Querrichtung verläuft, in der Verlängerung der Rinne (4),
die genannten Gegenstände kommen auf einem Förderband (13) an, das sich in der Verlängerung der glatten Fläche (12) befindet,
während die Schiebeeinrichtung (11) die genannte Reihe entleert und dann in ihre Ruhestellung zurückkehrt, bildet sich in der Rinne (4) progressiv eine neue Reihe von Gegenständen.

2. Vorrichtung nach Anspruch 1, **dadurch gekennzeichnet, dass** an dem vorderen Ende einer Schutzbande (2) eine Aussparung (14) vorgesehen ist, längs des Seitenrands des genannten Rütteltisches (1) der auf derselben Seite dieses Rütteltisches (1) wie die genannte glatte Fläche (12) liegt, so dass jeder Gegenstand (6), der, nachdem er in die Rinne gehüpft wurde, so ist er umgefallen, dass ein Teil dieses Gegenstandes (6) auf dem Rütteltisch (1) liegt, in dem Moment, wo er den Rand des Rütteltisches (1) erreicht, nach unten fällt.

3. Vorrichtung nach Anspruch 1 oder 2, **dadurch gekennzeichnet, dass** die genannte Schiebeeinrichtung (11) an einem Endlosband (8) befestigt ist, das unter Spannung um zwei Antriebsrollen (9) und (10) läuft.
